# EUROPÄISCHE PATENTSCHRIFT

(11) **EP 3 993 339 B1**
(45) Veröffentlichungstag und Bekanntmachung des Hinweises auf die Patenterteilung: **31.05.2023**
(21) Anmeldenummer: 20204745.2
(22) Anmeldetag: 29.10.2020
(51) Int. Cl.: H04L 9/40, H04L 9/32, G06F 21/33

(54) **ZERTIFIKATSMANAGEMENT IN EINER TECHNISCHEN ANLAGE**
CERTIFICATE MANAGEMENT IN A TECHNICAL SYSTEM
GESTION DES CERTIFICATS DANS UNE INSTALLATION TECHNIQUE

(43) Veröffentlichungstag der Anmeldung: 04.05.2022
(73) Patentinhaber: Siemens Aktiengesellschaft, 80333 München (DE)
(72) Erfinder: Lutz, Benjamin, 76327 Pfinztal (DE); Palmin, Anna, 76187 Karlsruhe (DE)
(74) Vertreter: Siemens Patent Attorneys

(56) Entgegenhaltungen:
- EP-A1- 3 287 925
- EP-A1- 3 537 323
- EP-A2- 2 549 710
- US-A1- 2002 004 773

## Beschreibung

Die Erfindung betrifft ein Leitsystem einer technischen Anlage, insbesondere einer Fertigungs- oder Prozessanlage, mit den Oberbegriffsmerkmalen des Anspruchs 1. Außerdem betrifft die Erfindung ein Anlagenkomponentensystem und eine Verwendung eines Leitsystems.

In modernen prozessleittechnischen Anlagen kommen zunehmend Protokolle für die sichere Kommunikation (z.B. mittels OPC UA oder TLS) zum Einsatz. Dies macht die Nutzung von sogenannten digitalen Zertifikaten erforderlich. In manchen Anlagen ist für diesen Zweck ein Public Key Infrastruktur (PKI) eingerichtet, die insbesondere eine vertrauenswürdige, "ausstellende" Zertifizierungsinstanz (engl. Issuing Certification Authority, kurz: Issuing CA) als eine zentrale Komponente beinhaltet, die Zertifikate für Anlagenkomponenten ausstellen und signieren kann. Hierdurch kann sie die Vertrauenswürdigkeit von Anlagenkomponenten beglaubigen bzw. bestätigen.

Die Vertrauenswürdigkeit der Issuing CA selbst kann dadurch gewährleistet werden, dass ihr eigenes Zertifikat durch eine vertrauenswürdige Zwischen-CA (engl. Intermediate CA) signiert ist, deren Zertifikat wiederum durch eine weitere Intermediate CA signiert ist. Die gesamte Kette führt in der Regel zu einer sog. Wurzelzertifizierungsstelle (engl. Root CA), die selbstsigniert ist (d.h. ihr Zertifikat selbst signiert hat). Die Wurzelzertifizierungsstelle wird nachweisbar sicher - gemäß den im RFC 3647 aufgeführten Certificate Policies - aufbewahrt. Die Root CA kann auch als Vertrauensanker (engl. Trust Anchor) bezeichnet werden.

Eine Registrierungsstelle (engl. Registration Authority, kurz: RA) hat als eine weitere zentrale Komponente einer Public Key Infrastruktur einer Automatisierungsanlage insbesondere die Aufgabe, die Zertifikatsanträge (engl. Certificate Signing Requests, CSR) von diversen Anlagenkomponenten entgegenzunehmen. In Rücksprache mit einem sog. RA-Inventory, das auch als Geräteinventar bezeichnet wird, und dessen Inhalte z.B. aus einer Konfigurationsbeschreibung einer technischen Anlage entstammen können, kann die Registrierungsstelle die Zertifikatsanträge validieren. Eine solche Registrierungsstelle ist beispielsweise in der Druckschrift EP 3 402 152 A1 offenbart.

Die Registrierungsstelle prüft im Rahmen der Validierung anhand der im Zertifikatsantrag enthaltenen Identifikation des jeweiligen Gerätes bzw. der Anlagekomponente, von dem der Zertifikatsantrag stammt, ob das Gerät in dem RA-Inventory hiterlegt ist (und somit im Anlagenkontext grundsätzlich dazu berechtigt ist, Zertifikate zu beantragen und zu bekommen). Anschließend prüft sie die den Zertifikatsantrag einschließlich dessen Signatur.

Wird für das Zertifikatsmanagements ein Standardprotokoll (z.B. CMP nach RFC4210) verwendet, kann es sich bei den Zertifikatsanträgen um Anträge zwecks der initialen Beantragung (Bootstrapping) oder Erneuerung (Update) von Zertifikaten handeln. Beim Bootstrapping wird der Zertifikatsantrag in der Regel mit dem Gerätezertifikat (engl. Manufacturer Device Certificate, kurz: MDC) signiert, während beim Update das zuletzt ausgestellte operative Zertifikat (OC) zum Signieren verwendet wird. Alternativ oder zusätzlich zum Gerätezertifikat (das während der Fertigung von einer Hersteller-CA ausgestellt wird), kann auch das sog. Kundenzertifikat (engl. Customer Device Certificate, kurz: CDC), welches das Gerät nach einer entsprechenden Prüfung in der Kundenanlage erhalten hat, verwendet werden.

Damit die Anlagenkomponenten, die miteinander unter Verwendung eines sicheren Protokolls kommunizieren, ihre Zertifikate gegenseitig validieren können, muss jeder der Komponenten die Vertrauenskette (engl. Trust Chain) jeweils der anderen Komponenten vorliegen. Im Rahmen der gegenseitigen Zertifikatsvalidierung werden von den Komponenten die Zertifikate ihrer Kommunikationspartner sowie alle in der zugehörigen Vertrauenskette enthaltenen CA-Zertifikate validiert.

Ein obligatorischer Schritt im Rahmen der Validierung ist die Validierung des Revokationsstatus des jeweiligen (CA-) Zertifikats. Dabei wird überprüft, ob das Zertifikat auf einer durch die zuständige Zertifizierungsinstanz (Issuing CA) ausgestellten und signierten Sperrliste (engl. Certificate Revocation List, kurz: CRL) veröffentlicht ist. In der Regel wird die Sperrliste von der Issuing CA auf einem CRL-Verteilungspunkt (engl. CRL Distribution Point, kurz: CDP) hinterlegt, dessen Adresse von der Issuing CA in das Zertifikat hinein übernommen wird. So kann jede Anlagenkomponente selbst den Revokationsstatus ihres eigenen Zertifikats sowie der Zertifikate ihrer Kommunikationspartners prüfen, indem sie die Sperrliste von dem entsprechenden CDP "holt" und prüft, ob die Sperrliste das jeweilige Zertifikate enthält.

Die Kommunikationsnetzwerke von technischen Anlagen sind nach gängigen Security-Empfehlungen (z.B. gemäß der internationalen Norm IEC 62443) stark segmentiert. Jedes Netzwerksegment stellt dabei eine autark funktionierende Security-Zelle dar. Der Zugriff auf die Geräte/Anlagenkomponenten in einer solchen Zelle ist in der Regel stark reglementiert und erfolgt über einen dedizierten Zugangspunkt (z.B. eine Firewall). Der gleiche Ansatz erweist sich als auch bei der Absicherung der einzelnen Module einer modularen technischen Anlage gegen unberechtigte Zugriffe als sinnvoll.

In der WO 2017/144056 A1 ist ein Verfahren zur Verbesserung der Informationssicherheit von Fahrzeug-zu-X Kommunikation offenbart, wobei die Fahrzeug-zu-X Kommunikation mittels zumindest eines Zertifikats absicherbar ist.

Die EP 3 624 413 A1 offenbart ein grundlegendes Verfahren zur Beantragung eines Zertifikats bei einer Registrierungsstelle einer technischen Anlage durch eine Komponente der technischen Anlage. Eine Revokation von Zertifikaten wird in diesem Kontext nicht behandelt.

Die Europäische Patentanmeldung EP2549710 ist weiterer Stand der Technik.

Im Zusammenhang mit dem oben beschriebenen Einsatz von Zertifikaten zum Absichern einer Kommunikation innerhalb einer technischen Anlage kann es zu verschiedenen Problemen können. Anlagenkomponenten, die eine Registrierungsstelle netzwerktechnisch nicht erreichen können, können ihre Zertifikatsanträge nicht direkt an die Registrierungsstelle richten. Dies kann beispielsweise daran liegen, dass die Anlagenkomponenten mit einem Anlagenbus verbunden sind und/oder sich in dedizierten, netzwerktechnisch in sich geschlossenen Teilnetzen befinden, und daher keine Verbindung zu der Registrierungsstelle aufbauen können. In manchen Fällen könnte der Zugriff zwar über eine Konfiguration von adäquaten Firewall-Regeln ermöglicht werden. Bei einer hohen Anzahl von Anlagenkomponenten hingegen wäre dieser Ansatz nicht praktikabel, da eine zu große Menge an Firewall-Regeln zu einer Intransparenz und einem hohen Konfigurations- und Wartungsaufwand sowie zur erhöhten Fehleranfälligkeit führen würden.

Es kann zudem nicht garantiert sein, dass ein Zugriff der sich in verschiedenen Netzwerksegmenten befindenden Anlagenkomponenten auf die aktuelle Sperrliste bei der Prüfung des Revokationsstatus ihrer eigenen Zertifikate oder der Zertifikate der Kommunikationspartner stets funktioniert. Um sicherzustellen, dass die Prüfung des Revokationsstatus in einer (ggf. stark segmentierten) Anlage (in welcher es insbesondere Netzwerksegmente ohne direkten Zugriff auf die relevanten Issuing CAs und die zugehörigen CDPs gibt) jederzeit reibungslos möglich ist, wird zwar empfohlen, einen CDP in jedem Netzwerksegment einzurichten und dafür zu sorgen, dass auf jedem solchen CDP alle notwendigen Sperrlisten abgelegt sind. Die Verteilung der Sperrlisten auf verschiedene CDPs (die aktuell in der Regel mit Hilfe von rudimentären, rein applikativen Lösungen wie Skripten, Batchdateien erfolgt) ist jedoch erfahrungsgemäß mit einem sehr hohen Konfigurationsaufwand verbunden und dazu nicht zuverlässig. Wird eine Sperrliste (beispielsweise aufgrund der netzwerktechnischen Probleme) nicht sofort oder gar nicht nach dem durch die Revokation eines Zertifikats verursachten Neu-Ausstellen auf alle CDPs verteilt, so kommt es häufig zu Time-Outs bei der Validierung der eigenen Zertifikate durch die Komponenten selbst oder der Validierung der Zertifikate der Kommunikationspartner.

Dadurch, dass die Anlagenkomponenten aufgrund der o.g. netzwerktechnischen Probleme, daran gehindert werden können,
- die für die Kommunikation mit den anderen Komponenten notwendigen Zertifikate im Bedarfsfall rechtzeitig zu beantragen oder zu erneuern, sowie
- auf die erforderlichen Sperrlisten zuzugreifen, um den Revokationsstatus des Zertifikats ihrer Kommunikationspartner zu prüfen,
können eine sichere Kommunikation in der technischen Anlage stark gestört bzw. unterbrochen werden. Dadurch sind der Normalbetrieb und die Verfügbarkeit einer technischen Anlage (als das oberste Schutzziel im Hinblick auf Security) potenziell stark gefährdet.

Der Erfindung liegt die Aufgabe zugrunde, ein Leitsystem für eine technische Anlage anzugeben, das zu einer Erhöhung der Verfügbarkeit der technischen Anlage bei einer gleichzeitig erhöhten Manipulationssicherheit beiträgt.

Diese Aufgabe wird gelöst durch ein Leitsystem für eine technische Anlage, insbesondere eine Fertigungs- oder Prozessanlage, mit den Merkmalen des Anspruchs 1. Zudem wird die Aufgabe gelöst durch ein Automatisierungskomponentensystem gemäß Anspruch 7. Zudem wird die Aufgabe gelöst durch eine Verwendung eines Leitsystems zur Verwaltung von Zertifikaten, gemäß Anspruch 9. Vorteilhafte Weiterbildungen ergeben sich aus den abhängigen Ansprüchen.

Ein Leitsystem eingangs beschriebener Art umfasst wenigstens eine Zertifizierungsstelle, wenigstens eine erste Anlagenkomponente und wenigstens eine zweite Anlagenkomponente, wobei die Zertifizierungsstelle für ein Ausstellen und Revozieren von Zertifikaten für wenigstens die erste Anlagenkomponente und die zweite Anlagenkomponente zuständig und ausgebildet ist. Das Leitsystem ist dadurch gekennzeichnet, dass in dem Leitsystem ein Sperrlistendienst implementiert ist, der dazu ausgebildet ist, von der Zertifizierungsstelle eine Sperrliste mit von der Zertifizierungsstelle revozierten Zertifikaten zu empfangen und den Anlagenkomponenten bereitzustellen, und dass wenigstens auf der ersten Anlagenkomponente und der zweiten Anlagenkomponente ein Sperrlistenverteilungsdienst implementiert ist, der dazu ausgebildet ist, die Sperrliste von dem Sperrlistendienst zu empfangen und in einem Speicher der jeweiligen Anlagenkomponente zu hinterlegen, wobei der Sperrlistenverteilungsdienst einer Anlagenkomponente jeweils weiterhin dazu ausgebildet ist, sich mit dem Sperrlistenverteilungsdienst auf einer anderen Anlagenkomponente zu verbinden und von diesem die Sperrliste zu empfangen.

Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem umfasst im vorliegenden Fall wenigstens eine erste Anlagenkomponente und eine zweite Anlagenkomponente. Zudem kann das Leitsystem sogenannte prozess- oder fertigungsnahe Komponenten umfassen, die zur Ansteuerung von Aktoren bzw. Sensoren dienen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Bei einer Anlagenkomponente kann es sich um einzelne Messumformer für Sensoren oder Steuergeräte für Aktoren der technischen Anlage handeln. Eine Anlagenkomponente kann aber auch ein Zusammenschluss mehrerer solcher Messumformer oder Steuergeräte sein, beispielsweise ein Motor, ein Reaktor, eine Pumpe oder ein Ventilsystem. Übergeordnete Geräte wie ein Automatisierungsgerät, ein Engineering Station Server, ein Operator Station Server oder eine dezentrale Periphere sind ebenfalls unter dem Begriff "Anlagenkomponente" zu fassen. Ein Automatisierungsgerät ist dabei ein technisches Gerät, das zur Realisierung einer Automatisierung benutzt wird. Es kann sich dabei beispielsweise um eine speicherprogrammierbare Steuerung handeln, die eine übergeordnete Steuerungsfunktion für untergeordnete Steuerungen darstellt. Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen (wie einem Automatisierungsgerät) der technischen Anlage her und gibt Daten der technischen Anlage an sogenannte Clients weiter, die zur Bedienung und Beobachtung eines Betriebs der einzelnen Funktionselemente der technischen Anlage dienen.

Der Operator Station Server kann über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Unter einem "Engineering Station Server" wird vorliegend ein Server verstanden, der dazu ausgebildet ist, verschiedene Hardware- und Software-Projekte für ein Leitsystem einer technischen Anlage zu erstellen, verwalten, archivieren und dokumentieren. Mithilfe von speziellen Software-Entwurfswerkzeugen (Engineering Toolset) sowie vorgefertigten Bausteinen und Plänen kann mittels des Engineering Station Servers ein Zusammenspiel von leittechnischen Geräten und Einrichtungen der technischen Anlage geplant und verwaltet werden. Ein Beispiel für einen solchen Engineering Station Server ist ein SIMATIC Manager Server der Firma SIEMENS.

Die Zertifizierungsstelle kann auch als eine sogenannte "Issuing CA (Certification Authority)" bezeichnet werden und stellt, basierend auf eingehenden Zertifikatsanträgen, Zertifikate für diverse Antragsteller aus, die sie mit ihrem eigenen Zertifikat signiert. Die Vertrauenswürdigkeit der Zertifizierungsinstanz kann dadurch sichergestellt sein, dass ihr eigenes Zertifikat durch das Zertifikat einer vertrauenswürdigen Wurzelzertifizierungsinstanz (auch als "Root CA" bezeichnet), die sich in einer abgesicherten Umgebung befindet, signiert ist. Die Zertifizierungsinstanz kann nicht nur Zertifikate ausstellen, sondern diese auch widerrufen (revozieren). Damit die Zertifizierungsinstanz die Revokation bzw. Widerrufung eines Zertifikats vornimmt, ist in der Regel ein entsprechender Revokationsantrag einer Anlagenkomponente erforderlich, deren Zertifikat revoziert werden soll.

Unter einem Zertifikat wird ein digitaler Datensatz nach dem Standard X.509 (RFC 5280) verstanden, der bestimmte Eigenschaften (in diesem Fall von Maschinen, Geräten, Applikationen und dergleichen) bestätigt. Eine Authentizität und Integrität des Zertifikats können in der Regel mittels kryptografischer Verfahren verifiziert werden. Bei einem Zertifikat kann es sich um ein operatives Zertifikat, das für eine Kommunikation zwischen verschiedenen Anlagenkomponenten der technischen Anlage verwendet wird, oder um ein komponenteneigenes Zertifikat, welches auch als Herstellerzertifikat bezeichnet wird, oder um ein vergleichbares Zertifikat handeln.

Der Sperrlistenverteilungsdienst hinterlegt die Sperrliste in dem Speicher der jeweiligen Anlagenkomponente, um diese sowohl der Anlagenkomponente selbst wie auch weiteren Sperrlistenverteilungsdiensten anderer Anlagenkomponenten bereitstellen zu können. Ist beispielsweise der Sperrlistendienst im Netzwerk des Leitsystems von einer Anlagenkomponente nicht unmittelbar erreichbar, kann sich der auf dieser Anlagenkomponente implementierte Sperrlistenverteilungsdienst an einen anderen Sperrlistenverteilungsdienst einer anderen Anlagenkomponente wenden, um eine aktuelle Sperrliste (die er zur Validierung einer Gültigkeit von Zertifikaten im Rahmen einer aufzubauenden Kommunikation mit anderen Anlagenkomponenten verwenden kann) zu erhalten. Eine Sicherheit der technischen Anlage kann dadurch selbst bei Ausfall einiger Sicherheitskomponenten oder der Unterbrechung von Kommunikationsverbindungen aufrechterhalten werden, was generell die Ausfallsicherheit der technischen Anlage erhöhen kann.

Durch die hierarchische Anordnung von Sperrlistendienst und der Sperrlistenverteilungsdienste kann demnach ermöglicht werden, dass die Sperrlisten im Bedarfsfall stets aktuell, verfügbar und durch die Anlagenkomponenten erreichbar sind.

Der Sperrlistendienst ist erfindungsgemäß dazu ausgebildet, die Sperrliste von der Zertifizierungsstelle zu empfangen. Dies bedeutet nicht notwendigerweise, dass er die Sperrliste direkt, d.h. unmittelbar, von der Zertifizierungsstelle beziehen muss. Vielmehr kann die Zertifizierungsstelle die Sperrliste auch auf einem speziellen Sperrlisten-Verteilungspunkt (CDP) hinterlegen, von wo der Sperrlistendienst die Sperrliste dann abruft. Das Empfangen der Sperrliste erfolgt hier also indirekt.

Bevorzugt weist der Sperrlistendienst einen Speicher auf, in welchem die von der Zertifizierungsstelle empfangene Sperrliste hinterlegbar ist. Hierdurch kann zum einen eine Reduktion von Netzwerklasten und zum anderen eine Optimierung der Leistungsfähigkeit des Sperrlistendienstes bewirkt werden.

Im Rahmen einer vorteilhaften Weiterbildung der Erfindung kann der Sperrlistendienst über eine variable Konfiguration verfügen, dahingehend, dass vorzugsweise im Rahmen einer Projektierung der technischen Anlage (d.h. während einer Engineering-Phase) vorgebbar ist, mit welcher Zertifizierungsstelle sich der Sperrlistendienst verbindet, um die Sperrliste zu beziehen. Die Konfiguration kann beispielsweise auch automatisch von den Kommunikationsabhängigkeiten der im Kontext der technischen Anlage projektierten Anlagenkomponenten abgeleitet werden. Der Sperrlistendienst könnte auch eigenständig nach Adressen von Zertifizierungsstellen (oder entsprechenden Sperrlisten-Verteilungspunkten) innerhalb des Leitsystems der technischen Anlage suchen (anhand typischerweise verwendeten Netzwerkadressen, bestimmten Adressmustern oder dergleichen). Dies könnte jedoch gegenüber der vorteilhaften Weiterbildung der Erfindung einen höheren Kommunikationsaufwand bedingen.

Besonders bevorzugt ist in dem Leitsystem ein Zertifikatsdienst implementiert, der mit der Zertifizierungsstelle direkt - oder indirekt über eine Registrierungsstelle - in Verbindung steht, wobei die Anlagenkomponenten unter Zuhilfenahme des Zertifikatsdienstes Zertifikatsanträge und Revokationsanträge für Zertifikate an die Zertifizierungsstelle richten können. Der Zertifikatsdienst bietet die Möglichkeit, Zertifikatsanträge (initial oder zur Erneuerung) oder Revokationsanträge an die Zertifizierungsstelle (direkt oder indirekt) weiterzuleiten, wenn aus unterschiedlichen Gründen diese von den jeweiligen Anlagenkomponenten nicht direkt erreicht werden können. Somit können im Sinne der Robustheit ausgefallene Kommunikationswege überbrückt, oder, im Sinne der Anlagensicherheit, direkte Kommunikationswege reduziert werden.

Vorteilhafterweise sind wenigstens auf der ersten Anlagenkomponente und der zweiten Anlagenkomponente Informationen darüber hinterlegt, welche Netzwerkadresse der Zertifikatsdienst und/oder der Sperrlistendienst aufweisen. Somit kann der jeweilige Sperrlistenverteilungsdienst einfach und effizient die aktuelle Sperrliste abrufen und in seinem Speicher hinterlegen.

Im Rahmen einer bevorzugten Weiterbildung der Erfindung ist der Zertifikatsdienst auf einer Anlagenkomponente implementiert, die sowohl einen Zugriff auf einen Anlagenbus als auch auf einen Terminalbus der technischen Anlage aufweist. Der Anlagenbus dient dabei der Kommunikation zwischen "niedrigeren" Hierarchiestufen der technischen Anlage wie Messumformern, dezentralen Peripherien oder Automatisierungsgeräten. Der Terminalbus verbindet "höhere" Hierarchiestufen der technischen Anlage wie einen Operator Station Client und einen dazugehörigen Operator Station Server miteinander. Der Terminalbus und der Anlagenbus können, ohne sich darauf zu beschränken, beispielsweise als Industrial Ethernet ausgebildet sein. Der Vorteil dieser Weiterbildung der Erfindung liegt darin, dass Anlagenkomponenten, die aus Gründen der Kommunikationssicherheit nicht direkt mit der Zertifizierungsstelle (oder der Registrierungsstelle) kommunizieren können, über den Zertifikatsdienst ihre Zertifikate initial beziehen, erneuern oder widerrufen können.

Die zuvor formulierte Aufgabe wird zudem gelöst durch Anlagenkomponentensystem eines Leitsystems einer technischen Anlage, das wenigstens eine erste Anlagenkomponente und eine zweite Anlagenkomponente aufweist, in denen jeweils ein Sperrlistenverteilungsdienst und ein Speicher implementiert sind, wobei der Sperrlistenverteilungsdienst der ersten Anlagenkomponente dazu ausgebildet ist, eine Sperrliste mit von einer Zertifizierungsstelle revozierten Zertifikaten zu empfangen und diese im Bedarfsfall an den Sperrlistenverteilungsdienst der zweiten Anlagenkomponente zu übertragen, und umgekehrt.

Bevorzugt ist bei dem Anlagenkomponentensystem auf der ersten Anlagenkomponente und der zweiten Anlagenkomponente eine Information darüber hinterlegt, unter welcher Netzwerkadresse innerhalb des Leitsystems der technischen Anlage die Sperrliste abgerufen und/oder ein Zertifikat beantragt oder revoziert werden kann.

Die zuvor formulierte Aufgabe wird zudem gelöst durch die Verwendung eines Leitsystems, wie es zuvor beschrieben wurde, zur Verwaltung von Zertifikaten, die Anlagenkomponenten einer technischen Anlage zugewiesen oder für diese revoziert werden sollen.

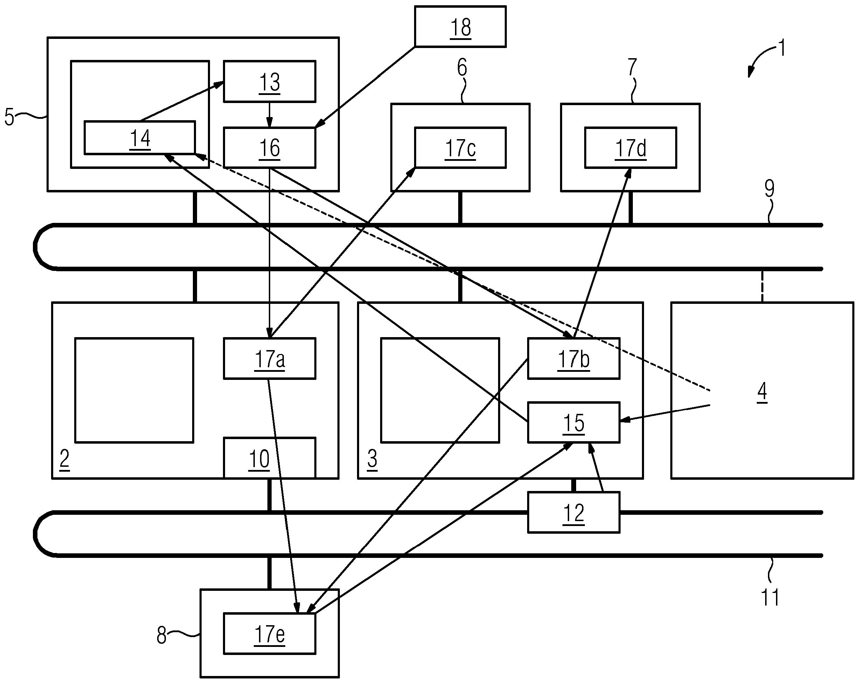

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit der Zeichnung näher erläutert wird.

In der Figur ist ein Teil eines erfindungsgemäßen Leitsystems 1 einer als Prozessanlage, d.h. als verfahrenstechnische Anlage, ausgebildeten technischen Anlage dargestellt. Das Leitsystem 1 umfasst einen Engineering Station Server 2, einen Operator Station Server 3, einen Wartungsserver 4 und einen Verwaltungsserver 5. Zudem umfasst das Leitsystem 1 einen Engineering Station Client 6, einen Operator Station Client 7 und ein Automatisierungsgerät 8.

Der Engineering Station Server 2, der Operator Station Server 3, der Wartungsserver 4, der Verwaltungsserver 5, der Engineering Station Client 6 und der Operator Station Client 7 sind über einen Terminalbus 9 miteinander und optional mit nicht dargestellten weiteren Komponenten des Leitsystems 1 wie einem Prozessdatenarchiv verbunden.

Ein Benutzer bzw. Operator kann zum Zwecke des Bedienens und Beobachtens über den Operator Station Client 7 mittels des Terminalbus 9 auf den Operator Station Server 3 zugreifen. Ein Projekteur bzw. Bediener hat mittels des Engineering Station Clients 6 mittels des Terminalbus 9 im Kontext eines Engineerings / Projektierens / Konfigurierens Zugriff auf den Engineering Station Server 2. Der Terminalbus 9 kann, ohne sich darauf zu beschränken, beispielsweise als Industrial Ethernet ausgebildet sein.

Der Engineering Station Server 2 weist eine Schnittstelle 10 auf, die mit einem Anlagenbus 11 verbunden ist. Über diese Schnittstelle 10 kann der Engineering Station Server 2 mit dem Automatisierungsgerät 8 sowie mit optional vorhandenen weiteren Komponenten der Prozessanlage kommunizieren. Im vorliegenden Ausführungsbeispiel ist ein Switch 12 mit dem Anlagenbus 11 verbunden, der eine Kommunikation zwischen verschiedenen Teilnehmern über den Anlagenbus 11 koordiniert. Der Anlagenbus 11 kann, ohne sich darauf zu beschränken, beispielsweise als Industrial Ethernet ausgebildet sein. Das Automatisierungsgerät 8 kann mit einer beliebigen Anzahl an Subsystemen (nicht dargestellt) verbunden sein.

Auf dem Verwaltungsserver 5 ist eine Zertifizierungsstelle 13 (Issuing CA) und eine Registrierungsstelle 14 (RA) implementiert. Die Zertifizierungsstelle 13 kann alternativ auch auf einem dedizierten Server implementiert sein. Auf dem Operator Station Server 3 ist ein Zertifikatsdienst 15 implementiert. Anlagenkomponenten wie der Wartungsserver 4, der Engineering Station Server 2 oder das Automatisierungsgerät 8 können einen Zertifikatsantrag (also einen Antrag, ein Zertifikat ausgestellt zu bekommen) an den Zertifikatsdienst 15 stellen. Diesen Zertifikatsantrag leitet der Zertifikatsdienst 15 an die Registrierungsstelle 14 weiter, welche den Zertifikatsantrag (nach ggf. erfolgter Prüfung, ob der Anlagenkomponente überhaupt ein Zertifikat zusteht) an die Zertifizierungsstelle 13 weiterleitet. Diese prüft den Zertifikatsantrag auf Validität und stellt bei erfolgreicher ein Zertifikat für die beantragende Anlagenkomponente aus.

Eine Anlagenkomponente kann auch einen Revokationsantrag (zum Revozieren eines bestehenden Zertifikats) an den Zertifikatsdienst 15 leiten. Dieser nimmt den zuvor beschriebenen Weg zur Zertifizierungsstelle 13, welche das Zertifikat widerruft (revoziert). Auf dem Verwaltungsserver 5 ist ein Sperrlistendienst 16 implementiert, welcher von der Zertifizierungsstelle 13 eine aktuelle Sperrliste empfängt, welche wenigstens das zuvor widerrufene Zertifikat umfasst. Der Sperrlistendienst 16 kann auch Sperrlisten von externen, d.h. außerhalb der Prozessanlage befindlichen Zertifizierungsstellen 18 empfangen. Die Sperrliste wird in einem Speicher (nicht dargestellt) des Sperrlistendienstes 16 hinterlegt, um bei Bedarf wie folgt abgerufen und verteilt werden zu können.

Auf den Anlagenkomponenten (hier dem Engineering Station Server 2, dem Operator Station Server 3, dem Engineering Station Client 6, dem Operator Station Client 7 und dem Automatisierungsgerät 8 ist jeweils ein Sperrlistenverteilungsdienst 17a, 17b, 17c, 17d, 17e implementiert. Der Sperrlistenverteilungsdienst 17a, 17b, 17c, 17d, 17e kann sich jeweils über die ihnen bekannten Verbindungswege mit dem Sperrlistendienst 16 verbinden, sofern eine direkte Verbindung möglich ist, um die Sperrlisten zu den jeweiligen Anlagenkomponenten weiterleiten zu können, auf denen die Sperrlistenverteilungsdienste 17a, 17b, 17c, 17d, 17e implementiert sind.

Der auf dem Engineering Station Server 2 und dem Operator Station Server 3 implementierte Sperrlistenverteilungsdienst 17a, 17b kann sowohl auf den Anlagenbus 11 wie auch auf den Terminalbus 9 zugreifen. Der Sperrlistenverteilungsdienst 17e auf dem Automatisierungsgerät 8 kann im vorliegenden Ausführungsbeispiel über den Sperrlistenverteilungsdienst 17a des Engineering Station Servers 2 oder über den Sperrlistenverteilungsdienst 3 des Operator Station Servers 3 auf den Sperrlistendienst 16 zugreifen, um bei Bedarf (z.B. bei dem Aufbau einer Kommunikation zu einem neuen Kommunikationspartner) auf die aktuelle Sperrliste der Zertifizierungsstelle 13 zugreifen zu können. Die Sperrlistenverteilungsdienste 17a, 17b, 17c, 17d, 17e sind demnach in einer verzweigten Struktur angeordnet, innerhalb der ein Ausfall einer Kommunikationsverbindung durch die Nutzung einer Alternativroute kompensiert werden kann. Hierdurch kann die Verfügbarkeit der Prozessanlage deutlich erhöht werden.

## Patentansprüche

1. Leitsystem (1) für eine technische Anlage, insbesondere eine Fertigungs- oder Prozessanlage, das wenigstens eine Zertifizierungsstelle (13), wenigstens eine erste Anlagenkomponente (2, 3, 4, 5, 6, 7, 8) und wenigstens eine zweite Anlagenkomponente (2, 3, 4, 5, 6, 7, 8) umfasst,
wobei die Zertifizierungsstelle (13) für ein Ausstellen und Revozieren von Zertifikaten für wenigstens die erste Anlagenkomponente (2, 3, 4, 5, 6, 7, 8) und die zweite Anlagenkomponente (2, 3, 4, 5, 6, 7, 8) zuständig und ausgebildet ist,
wobei in dem Leitsystem (1) ein Sperrlistendienst (16) implementiert ist, der dazu ausgebildet ist, von der Zertifizierungsstelle (13) eine Sperrliste mit von der Zertifizierungsstelle (13) revozierten Zertifikaten zu empfangen und den Anlagenkomponenten (2, 3, 4, 5, 6, 7, 8) bereitzustellen, und dass wenigstens auf der ersten Anlagenkomponente (2, 3, 4, 5, 6, 7, 8) und der zweiten Anlagenkomponente (2, 3, 4, 5, 6, 7, 8) ein Sperrlistenverteilungsdienst (17a, 17b, 17c, 17d, 17e) implementiert ist, der dazu ausgebildet ist, die Sperrliste von dem Sperrlistendienst (16) zu empfangen und in einem Speicher der jeweiligen Anlagenkomponente (2, 3, 4, 5, 6, 7, 8) zu hinterlegen, wobei der Sperrlistenverteilungsdienst (17a, 17b, 17c, 17d, 17e) einer Anlagenkomponente (2, 3, 4, 5, 6, 7, 8) jeweils weiterhin dazu ausgebildet ist, sich mit dem Sperrlistenverteilungsdienst (17a, 17b, 17c, 17d, 17e) auf einer anderen Anlagenkomponente (2, 3, 4, 5, 6, 7, 8) zu verbinden und von diesem die Sperrliste zu empfangen.

2. Leitsystem (1) nach Anspruch 1, bei dem der Sperrlistendienst (16) einen Speicher aufweist, in welchem die von der Zertifizierungsstelle (13) empfangene Sperrliste hinterlegbar ist.

3. Leitsystem (1) nach Anspruch 1 oder 2, bei dem der Sperrlistendienst (16) über eine variable Konfiguration verfügt, dahingehend, dass vorzugsweise im Rahmen einer Projektierung der technischen Anlage vorgebbar ist, mit welcher Zertifizierungsstelle (13) sich der Sperrlistendienst (16) verbindet, um die Sperrliste zu beziehen.

4. Leitsystem (1) nach einem der vorangegangenen Ansprüche, in dem ein Zertifikatsdienst (15) implementiert ist, der mit der Zertifizierungsstelle (13) direkt oder indirekt über eine Registrierungsstelle (14) in Verbindung steht, wobei die Anlagenkomponenten (2, 3, 4, 5, 6, 7, 8) unter Zuhilfenahme des Zertifikatsdienstes (15) Zertifikatsanträge und Revokationsanträge für Zertifikate an die Zertifizierungsstelle (13) richten können.

5. Leitsystem (1) nach einem der vorangegangenen Ansprüche, bei dem wenigstens auf der ersten Anlagenkomponente (2, 3, 4, 5, 6, 7, 8) und der zweiten Anlagenkomponente (2, 3, 4, 5, 6, 7, 8) eine Information darüber hinterlegt ist, welche Netzwerkadresse der Zertifikatsdienst (15) und/oder der Sperrlistendienst (16) aufweisen.

6. Leitsystem (1) nach einem der vorangegangenen Ansprüche, bei dem der Zertifikatsdienst (15) auf einer Anlagenkomponente (2, 3, 4, 5, 6, 7, 8) implementiert ist, die sowohl einen Zugriff auf einen Anlagenbus (11) als auch auf einen Terminalbus (9) der technischen Anlage aufweist.

7. Anlagenkomponentensystem eines Leitsystems (1) einer technischen Anlage, das wenigstens eine erste Anlagenkomponente (2, 3, 4, 5, 6, 7, 8) und eine zweite Anlagenkomponente (2, 3, 4, 5, 6, 7, 8) aufweist, in denen jeweils ein Sperrlistenverteilungsdienst (17a, 17b, 17c, 17d, 17e) und ein Speicher implementiert sind, wobei der Sperrlistenverteilungsdienst (17a, 17b, 17c, 17d, 17e) der ersten Anlagenkomponente (2, 3, 4, 5, 6, 7, 8) dazu ausgebildet ist, eine Sperrliste mit von einer Zertifizierungsstelle (13) revozierten Zertifikaten zu empfangen und diese im Bedarfsfall an den Sperrlistenverteilungsdienst (17a, 17b, 17c, 17d, 17e) der zweiten Anlagenkomponente (2, 3, 4, 5, 6, 7, 8) zu übertragen, und umgekehrt.

8. Anlagenkomponentensystem nach Anspruch 7, bei dem auf der ersten Anlagenkomponente (2, 3, 4, 5, 6, 7, 8) und der zweiten Anlagenkomponente (2, 3, 4, 5, 6, 7, 8) eine Information darüber hinterlegt ist, unter welcher Netzwerkadresse innerhalb des Leitsystems (1) der technischen Anlage die Sperrliste abgerufen und/oder ein Zertifikat beantragt oder revoziert werden kann.

9. Verwendung eines Leitsystems (1) gemäß einem der Ansprüche 1 bis 6 zur Verwaltung von Zertifikaten, die Anlagenkomponenten (2, 3, 4, 5, 6, 7, 8) einer technischen Anlage zugewiesen oder für diese revoziert werden sollen.

## Claims

1. Control system (1) for a technical installation, in particular a production installation or process installation, and said control system comprises at least one certification body (13), at least one first installation component (2, 3, 4, 5, 6, 7, 8) and at least one second installation component (2, 3, 4, 5, 6, 7, 8),
wherein the certification body (13) is responsible for and embodied for issuing and revoking certificates for at least the first installation component (2, 3, 4, 5, 6, 7, 8) and the second installation component (2, 3, 4, 5, 6, 7, 8),
wherein
a certificate revocation list service (16) is implemented in the control system (1) and said certificate revocation list service is embodied so as to receive from the certification body (13) a certificate revocation list having certificates that have been revoked by the certification body (13) and so as to provide said certificate revocation list to the installation components (2, 3, 4, 5, 6, 7, 8),
and that a certificate revocation list distribution service (17a, 17b, 17c, 17d, 17e) is implemented at least on the first installation component (2, 3, 4, 5, 6, 7, 8) and the second installation component (2, 3, 4, 5, 6, 7, 8) and said certificate revocation list distribution service is embodied so as to receive the certificate revocation list from the certificate revocation list service (16) and to store said certificate revocation list in a storage device of the respective installation component (2, 3, 4, 5, 6, 7, 8), wherein the certificate revocation list distribution service (17a, 17b, 17c, 17d, 17e) of an installation component (2, 3, 4, 5, 6, 7, 8) is furthermore embodied in each case so as to connect to the certificate revocation list distribution service (17a, 17b, 17c, 17d, 17e) on another installation component (2, 3, 4, 5, 6, 7, 8) and to receive the certificate revocation list from this certificate revocation list distribution service on the other component.

2. Control system (1) according to claim 1, in which the certificate revocation list service (16) has a storage device in which it is possible to store the certificate revocation list that is received from the certification body (13).

3. Control system (1) according to claim 1 or 2, in which the certificate revocation list service (16) comprises a variable configuration to the effect that preferably within the scope of project planning of the technical installation it is possible to determine which certification body (13) the certificate revocation list service (16) connects to in order to obtain the certificate revocation list.

4. Control system (1) according to one of the preceding claims, in which a certificate service (15) is implemented and said certificate service is directly or indirectly connected via a registration authority (14) to the certification body (13), wherein the installation components (2, 3, 4, 5, 6, 7, 8) with the aid of the certificate service (15) can direct certificate requests and revocation requests for certificates to the certification body (13).

5. Control system (1) according to one of the preceding claims, in which information is stored at least on the first installation component (2, 3, 4, 5, 6, 7, 8) and the second installation component (2, 3, 4, 5, 6, 7, 8) regarding which network address the certificate service (15) and/or the certificate revocation list service (16) have.

6. Control system (1) according to one of the preceding claims, in which the certificate service (15) is implemented on an installation component (2, 3, 4, 5, 6, 7, 8) that has access to both an installation bus (11) as well as to a terminal bus (9) of the technical installation.

7. Installation component system of a control system (1) of a technical installation and said installation component system has at least one first installation component (2, 3, 4, 5, 6, 7, 8) and one second installation component (2, 3, 4, 5, 6, 7, 8) in which in each case a certificate revocation list distribution service (17a, 17b, 17c, 17d, 17e) and a storage device are implemented, wherein the certificate revocation list distribution service (17a, 17b, 17c, 17d, 17e) of the first installation component (2, 3, 4, 5, 6, 7, 8) is embodied so as to receive a certificate revocation list having certificates that have been revoked by a certification body (13) and to transfer this certificate revocation list when required to the certificate revocation list distribution service (17a, 17b, 17c, 17d, 17e) of the second installation component (2, 3, 4, 5, 6, 7, 8) and vice versa.

8. Installation component system according to claim 7, in which information is stored on the first installation component (2, 3, 4, 5, 6, 7, 8) and the second installation component (2, 3, 4, 5, 6, 7, 8) regarding under which network address within the control system (1) of the technical installation it is possible to retrieve the certificate revocation list and/or it is possible to apply for or to revoke a certificate.

9. Use of a control system (1) in accordance with one of claims 1 to 6 so as to manage certificates that are to be assigned to installation components (2, 3, 4, 5, 6, 7, 8) of a technical installation or are to be revoked for these installation components.

## Revendications

1. Système (1) de conduite d'une installation technique, notamment d'une installation de fabrication ou de processus, qui comprend au moins un poste (13) de certification, au moins un premier composant (2, 3, 4, 5, 6, 7, 8) de l'installation et au moins un deuxième composant (2, 3, 4, 5, 6, 7, 8) de l'installation, dans lequel le poste (13) de certification est compétent et est formé pour l'établissement et la révocation de certificats d'au moins le premier composant (2, 3, 4, 5, 6, 7, 8) de l'installation et le deuxième composant (2, 3, 4, 5, 6, 7, 8) de l'installation,
dans lequel
dans le système (1) de conduite est mis en oeuvre un service (16) de listes d'interdiction, qui est constitué pour recevoir du poste (13) de certification une liste d'interdiction, ayant des certificats révoqués par le poste (13) de certification et pour la mettre à disposition des composants (2, 3, 4, 5, 6, 7, 8) de l'installation,
et en ce qu'il est mis en oeuvre, au moins sur le premier composant (2, 3, 4, 5, 6, 7, 8) de l'installation et le deuxième composant (2, 3, 4, 5, 6, 7, 8) de l'installation, un service (17a, 17b, 17c, 17d, 17e) de distribution de listes d'interdiction, qui est constitué de manière à recevoir les listes d'interdiction du service (16) de listes d'interdiction et à les mettre dans une mémoire des composants (2, 3, 4, 5, 6, 7, 8) respectifs de l'installation, dans lequel le service (17a, 17b, 17c, 17d, 17e) de distribution de liste d'interdiction d'un composant (2, 3, 4, 5, 6, 7, 8) de l'installation est constitué en outre pour se relier au service (17a, 17b, 17c, 17d, 17e) de distribution de liste d'interdiction sur un autre composant (2, 3, 4, 5, 6, 7, 8) de l'installation et en recevoir la liste d'interdiction.

2. Système (1) de conduite suivant la revendication 1, dans lequel le service (16) de listes d'interdiction a une mémoire, dans laquelle la liste d'interdiction reçue du poste (13) de certification peut être mise.

3. Système (1) de conduite suivant la revendication 1 ou 2, dans lequel le service (16) de listes d'interdiction dispose d'une configuration variable, en ce sens que, dans le cas d'une mise sous forme de projet de l'installation technique, il peut être prescrit avec le poste (13) de certification auquel le service (16) de listes d'interdiction se relie pour fournir la liste d'interdiction.

4. Système (1) de conduite suivant l'une des revendications précédentes, dans lequel il est mis en oeuvre un service (15) de certificat, qui est en liaison avec le poste (13) de certification, directement ou indirectement, par l'intermédiaire d'un poste (14) d'enregistrement, dans lequel les composants (2, 3, 4, 5, 6, 7, 8) de l'installation peuvent, avec l'aide du service (15) de certificat, diriger sur le poste (13) de certification, des demandes de certificats et des demandes de révocation de certificat.

5. Système (1) de conduite suivant l'une des revendications précédentes, dans lequel au moins sur le premier composant (2, 3, 4, 5, 6, 7, 8) de l'installation et le deuxième composant (2, 3, 4, 5, 6, 7, 8) de l'installation est mise en mémoire une information sur les adresses de réseau du service (15) de certificat et/ou du service (16) de liste d'interdiction.

6. Système (1) de conduite suivant l'une des revendications précédentes, dans lequel le service (15) de certificat est mis en oeuvre sur un composant (2, 3, 4, 5, 6, 7, 8) de l'installation, qui a, à la fois, un accès à un bus (11) de l'installation et à un bus (9) terminal de l'installation technique.

7. Système de composants d'installation d'un système (1) de conduite d'une installation technique, qui a au moins un premier composant (2, 3, 4, 5, 6, 7, 8) de l'installation et un deuxième composant (2, 3, 4, 5, 6, 7, 8) de l'installation, dans lesquels sont mis en oeuvre respectivement un service (17a, 17b, 17c, 17d, 17e) de distribution de listes d'interdiction et une mémoire, dans lequel le service (17a, 17b, 17c, 17d, 17e) de distribution de listes d'interdiction du premier composant (2, 3, 4, 5, 6, 7, 8) de l'installation est constitué pour recevoir une liste d'interdiction ayant des certificats révoqués par un poste (13) de certification et pour les transmettre, en cas de besoin, au service (17a, 17b, 17c, 17d, 17e) de distribution de listes d'interdiction du deuxième composant (2, 3, 4, 5, 6, 7, 8) de l'installation et inversement.

8. Système de composants d'installation suivant la revendication 7, dans lequel il est mis en mémoire, sur le premier composant (2, 3, 4, 5, 6, 7, 8) de l'installation et le deuxième composant (2, 3, 4, 5, 6, 7, 8) de l'installation, une information sur les adresses de réseau au sein du système (1) de conduite de l'installation technique, auxquelles la liste d'interdiction peut être appelée et/ou un certificat peut être demandé ou révoqué.

9. Utilisation d'un système (1) de conduite suivant l'une des revendications 1 à 6 pour la gestion de certificats, qui sont affectés à des composants (2, 3, 4, 5, 6, 7, 8) d'installation d'une installation technique ou qui doivent être révoqués pour ceux-ci.
